# EUROPEAN PATENT SPECIFICATION

(11) **EP 3 178 570 B1**
(45) Date of publication and mention of the grant of the patent: **30.01.2019**
(21) Application number: 15198159.4
(22) Date of filing: 07.12.2015
(51) Int. Cl.: B06B 1/06, G01F 1/66

(54) **ULTRASONIC TRANSDUCER AND METHOD FOR MANUFACTURING AN ULTRASONIC TRANSDUCER**
ULTRASCHALLWANDLER UND VERFAHREN ZUR HERSTELLUNG EINES ULTRASCHALLWANDLERS
TRANSDUCTEUR ULTRASONORE ET PROCÉDÉ DE FABRICATION ASSOCIÉ

(43) Date of publication of application: 14.06.2017
(73) Proprietor: Danfoss A/S, 6430 Nordborg (DK)
(72) Inventor: Christensen, Torben Amby, 6400 Sønderborg (DK); Christensen Lyck, Henrik, 6400 Sønderborg (DK); Nielsen, Søren, 6400 Sønderborg (DK)
(74) Representative: Keil & Schaafhausen Patent- und Rechtsanwälte PartGmbB

(56) References cited:
- KR-A- 20110 061 023
- US-A- 5 884 627
- US-A1- 2009 071 252
- US-A1- 2011 314 933
- US-A1- 2013 192 386

## Description

The invention relates to an ultrasonic transducer, comprising a piezo element, an acoustic window, a housing and an acoustic coupling layer, wherein the acoustic coupling layer is arranged between the acoustic window and a first face of the piezo element.

Ultrasonic transducers are used to generate or receive ultrasonic signals. To this end, the ultrasonic transducer comprises an acoustic window to transfer the ultrasonic signals from or to a medium. The acoustic window usually consists of a metal or a plastic depending on the medium that shall be measured. A metal acoustic window may be preferred for abrasive media.

In many cases the ultrasonic transducer comprises an active vibrating element in the form of a piezo element to translate electric signals to ultrasonic signals and vice versa. To ensure an effective transfer of the ultrasonic signals from the acoustic window to the piezo element one usually arranges an acoustic coupling layer between the piezo element and the acoustic window. However, it is important to control the thickness of the acoustic coupling layer to ensure a high acoustic efficiency, low noise and high lifetime of the ultrasonic transducer. Controlling the thickness of the acoustic coupling layer is however difficult depending on the material used for the acoustic coupling layer, in particular if a fluid or an easily plastically deformable material is used.

US 2009/0071252 A1 discloses an ultrasonic probe head. A piezo element is indirectly forced against an acoustic window by a spring. An acoustic coupling layer is sandwiched between the acoustic window and the piezo element.

US 2013/0192386 A1 shows a similar construction of an ultrasonic transducer in which a piezo element is indirectly forced by two concentric springs against an acoustic window.

Form US 5 884 627 A a further ultrasonic probe is known. Therein a piezo element is provided with electrodes on two opposite sides of the piezo element. On each side of the piezo element an acoustic layer disposed.

Form US 2011/0314933 A1 an ultrasonic transducer for the use in a fluid medium is known. Between a piezo element and an acoustic window a matching element is arranged to transmit the ultrasonic signals.

KR 2011 0061023 A shows an ultrasonic transducer comprising several piezo elements fixed to the ultrasonic window.

The task of the present invention is therefore to provide an ultrasonic transducer of the above kind and a method for manufacturing the same in which the thickness of the acoustic coupling layer can be more accurately controlled.

According to the present invention the above task is solved in that the piezo element is fixed to the housing at a second face of the piezo element opposite to the acoustic coupling layer, and wherein the housing abuts the acoustic window to ensure a constant thickness of the acoustic coupling layer between the first face and the acoustic window in the resting position of the piezo element.

With this solution the piezo element may only be fixed to the housing at the second face of the piezo element opposite to the acoustic coupling layer. Thereby, it is ensured that the piezo element can still be deformed during operation of the ultrasonic transducer. Furthermore, the housing, to which the piezo element is fixed abuts the acoustic window to ensure a constant thickness of the acoustic coupling layer between the first face of the piezo element and the acoustic window in the resting position of the piezo element. This way it is ensured that the piezo element does not displace the acoustic coupling layer, for example, during assembly by its own weight. In particular, the latter is a problem if the acoustic coupling layer is fluid or if the acoustic coupling layer is made from an adhesive that needs to cure during the manufacture of the ultrasonic transducer. During the curing of the acoustic coupling layer the weight of the piezo element may otherwise lead to a thinning of the acoustic coupling layer below the intended thickness. Since the housing now abuts the acoustic window one may ensure that enough space is left for the acoustic coupling layer between the first face of the piezo element and the acoustic window and the piezo element does not displace the acoustic coupling layer.

In a preferred embodiment the housing and/or the acoustic window comprise a distance control feature. Preferably, the thickness of the distance control feature is the sum of the thickness of the piezo element and the intended thickness of the acoustic coupling layer. The thickness of the distance control feature is given by the perpendicular distance of the second face to the abutment area of the housing to the acoustic window.

In a further preferred embodiment the distance control feature comprises at least one leg. Preferably, the distance control feature comprises two, three or four legs. Alternatively, the distance control feature may comprise an annular rim. Between the legs or the rim an aperture may be arranged in which the piezo element as well as the acoustic coupling layer can be arranged. The acoustic window may abut against the legs or the rim as well as the acoustic coupling layer. If the distance control feature comprises a rim, the acoustic window can be a flat disc connected to the rim.

In a further preferred embodiment the distance control feature comprises at least one shoulder that is connected to the second face. The at least one shoulder can be arranged in a leg or an angular rim. The shoulder allows to connect the second face of the piezo element to the housing, for example, at the radial outer ends of the second face. At the same time the distance control feature can extend beyond the radial outer end of the piezo element such that the distance control feature extends beyond the thickness of the piezo element as well as the thickness of the acoustic coupling layer. This way it is ensured that the housing will abut the acoustic window in such a way that the correct distance between the first face of the piezo element and the acoustic window is maintained during assembly and therefore the acoustic coupling layer can maintain its intended thickness during assembly.

In a further preferred embodiment the acoustic coupling layer comprises an adhesive and/or a paste and/or an oil. The ultrasonic transducer according to the invention has the advantage that the thickness of the acoustic coupling layer can be controlled even if a fluid or liquid material is used for the acoustic coupling layer which may otherwise become thinner during assembly or during operation of the acoustic transducer by the impact of the piezo element.

In a further preferred embodiment the acoustic window is arranged in a flat bottom of a cup-shaped member. This solution simplifies the assembly of the ultrasonic transducer, since the acoustic window can be easily connected to the housing, for example by a snap connection of the outer walls of the cup-shaped member to the housing.

In a further preferred embodiment the piezo element has a cylindrical shape and the piezo element is only connected to the housing at the radially outer end of the second face. This way, it is ensured that the piezo element still has enough space inside the ultrasonic transducer to deform during operation. The connection to the housing at the radially outer end of the second face only partially limits the deformations of the piezo element.

The above task is also solved by an ultrasonic energy meter comprising an ultrasonic transducer according to any of the above embodiments. The ultrasonic transducer in the ultrasonic energy meter may in this case for example be used to measure the thermal energy of a refrigerant or a heating fluid in a cooling or heating circuit. In this case the ultrasonic energy meter is a cooling meter or a heat meter.

The above task is also solved by an ultrasonic flow meter comprising an ultrasonic transducer according to any of the above embodiments of an ultrasonic transducer. The ultrasonic flowmeter may for example be used to measure the flow of a heating or cooling fluid.

The above task is also solved by a method for manufacturing an ultrasonic transducer comprising a piezo element, an acoustic window, a housing and an acoustic coupling layer, comprising the following steps:
- fixing the piezo element to the housing at a second face of the piezo element,
- applying the acoustic coupling layer to a first face of the piezo element opposite to the second face, or applying the acoustic coupling layer to the acoustic window,
- connecting the acoustic window to the housing, such that the housing abuts the acoustic window to ensure a constant thickness of the acoustic coupling layer between the first face and the acoustic window in the resting position of the piezo element.

With this manufacture method the piezo element is first fixed to the housing at a second face of the piezo element. This way the position of the piezo element relative to the housing is fixed. Then the acoustic coupling layer is applied to the first face of the piezo element opposite to the second face. The acoustic window is then connected to the housing such that the housing abuts the acoustic window to ensure a constant thickness of the acoustic coupling layer between the first face and the acoustic window in the resting position of the piezo element. The resting position of the piezo element denotes the position where neither an ultrasonic signal reaches the piezo element and deforms it nor a voltage is applied to the piezo element to deform it and produce an ultrasonic signal. By first connecting the piezo element to the housing at a second face opposite to the first face at which the acoustic coupling layer is arranged, one can ensure that the piezo element will not negatively impact the intended thickness of the acoustic coupling layer. In particular, the weight of the piezo element will not lead to a thinning of the acoustic coupling layer, for example during the curing of the acoustic coupling layer (in case an adhesive is used for the acoustic coupling layer).

In a further preferred embodiment the piezo element is fixed to the housing by an adhesive and/or a snap connection. In case an adhesive is used one needs to ensure that the piezo element cannot be displaced during curing of the adhesive or one needs to wait until the adhesive is cured before the acoustic coupling layer is applied.

In a further preferred embodiment the piezo element is kept in a position with the second face down until the adhesive connection to the housing has cured. This way one may apply the acoustic coupling layer to the first face of the piezo element before the adhesive connection of the piezo element to the housing has cured. This fastens the manufacture method and therefore reduces the costs.

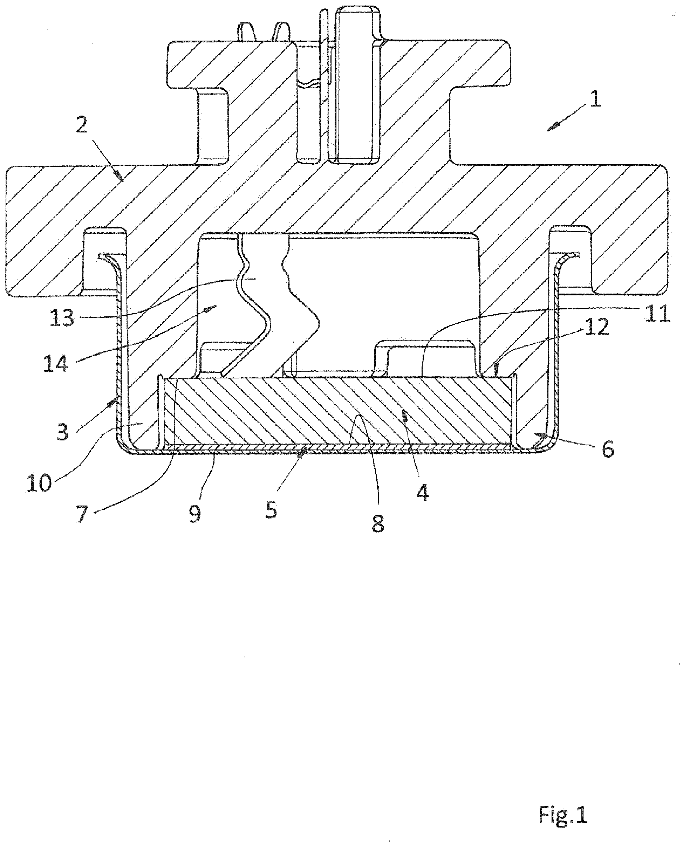

Preferred embodiments of the invention are now described with reference to the figure, wherein:
- The only fig.: shows a preferred embodiment of an ultrasonic transducer according to the invention.

The only figure shows an ultrasonic transducer 1, comprising a housing 2 in the form of a lid. In an aperture 14 of the housing 2 a piezo element 4 is arranged. At a first face 8 of the piezo element 4 an acoustic coupling layer 5 is arranged. The acoustic coupling layer 5 is arranged between the first face 8 and an acoustic window 9. The acoustic window 9 is part of a pot-shaped member 3 in this embodiment. The pot-shaped member 3 is in this case made from a metal to improve the transfer of the ultrasonic signal from the medium to the piezo element and vice versa. Similarly the acoustic coupling layer 5 ensures a reliable transfer of the ultrasonic signals from and to the piezo element 4. In the state of the art the thickness of the acoustic coupling layer 5 was difficult to control because on the one hand it is often made from a fluid (for example an oil) or at least a plastically deformable material (a paste or an adhesive). On the other hand, the piezo element 4 cannot be encased in the housing 2, because it needs to be able to elastically deform to transduce the ultrasonic signals. Consequently, the weight of the piezo element 4 in some cases resulted in a pressure on the acoustic coupling layer 5, whereby the acoustic coupling layer 5 was thinned out and the efficiency of the acoustic transducer consequently reduced.

According to the present invention however, the thickness of the acoustic coupling layer 5 can now be properly controlled. To this end, the piezo element 4 is fixed to the housing 2 at a second face 11 of the piezo element 4. In order to allow the piezo element 4 to elastically deform during operation the connection between the second face 11 and the housing 2 preferably is only made at a radially outer end 12 of the second face 11. In this embodiment the connections are made at four shoulders 7 of the housing 2. The shoulders 7 are arranged in distance control features 6, which in this case are formed as legs 10 of the housing 2. In this embodiment four legs 10 are arranged circumferentially around the piezo element 4. This way, the piezo element 4 still has enough room to elastically deform inside the aperture 14 of the housing 2.

The distance control feature 6 may alternatively be formed as a circumferential rim to which the piezo element 4 can be fixed at the radially outer end 12 of the second face 11.

The distance control feature 6 should ensure that the perpendicular distance between the second face 11 of the piezo element 4 and the acoustic window 9 corresponds to the sum of the thickness of the piezo element 4 and the intended thickness of the acoustic coupling layer 5. The housing 2 abuts the acoustic window 9 to ensure a constant thickness of the acoustic coupling layer 5 between the first face 8 and the acoustic window 9 in the resting position of the piezo element 4. The resting position of the piezo element 4 here denotes the position where the piezo element 4 is not deformed either by receiving an ultrasonic signal or by a voltage being applied to the piezo element. The piezo element 4 is connected by a connection lead 13 that allows to transfer electric signals out of or into the housing 2. Preferably the connection lead 13 is elastically deformable to allow the piezo element 4 to deform during operation without a loss of connection.

The connection between the piezo element 4 and the housing 2 can be made by an adhesive or a clamping or lock-in connection. In case an adhesive is used the lid is preferably placed in an upside down position such that the second face 11 points downwards and the acoustic coupling layer 5 can be applied to the first face 8 before the adhesive has fully cured. Then, the acoustic window 9 is connected to the acoustic coupling layer 5 and the housing 2. The connection between the acoustic window 9 and the housing 2 can be made by an adhesive, a clamping or lock-in connection or the like.

## Claims

1. An ultrasonic transducer (1), comprising a piezo element (4), an acoustic window (9), a housing and an acoustic coupling layer (5), wherein the acoustic coupling layer (5) is arranged between the acoustic window (9) and a first face (8) of the piezo element (4), **characterized in that**, the piezo element (4) is fixed to the housing (2) at a second face (11) of the piezo element (4) opposite to the acoustic coupling layer (5), and wherein the housing (2) abuts the acoustic window (9) to ensure a constant thickness of the acoustic coupling layer (5) between the first face (8) and the acoustic window (9) in the resting position of the piezo element (4),

2. The ultrasonic transducer (1) according to claim 1, **characterized in that**, the housing (2) and/or the acoustic window (9) comprise a distance control feature (6).

3. The ultrasonic transducer (1) according to claim 2, **characterized in that**, the distance control feature (6) comprises at least one leg (10).

4. The ultrasonic transducer (1) according to claim 2 or 3, **characterized in that**, the distance control feature (6) comprises a shoulder (7) that is connected to the second face (11).

5. The ultrasonic transducer (1) according to any of claims 1 to 4, **characterized in that**, the acoustic coupling layer (5) comprises an adhesive and/or a paste and/or an oil.

6. The ultrasonic transducer (1) according to any of claims 1 to 5, **characterized in that**, the acoustic window (9) is arranged in a flat bottom of a pot-shaped member (3).

7. The ultrasonic transducer (1) according to any of claims 1 to 6, **characterized in that**, the piezo element (4) has a cylindrical shape and the piezo element (4) is only connected to the housing (2) at the radially outer end (12) of the second face (11).

8. An ultrasonic energy meter comprising an ultrasonic transducer (1) according to any of claims 1 to 7.

9. An ultrasonic flow meter comprising an ultrasonic transducer (1) according to any of claims 1 to 7.

10. A method for manufacturing an ultrasonic transducer (1) comprising a piezo element (4), an acoustic window (9), a housing (2) and an acoustic coupling layer (5), comprising the following steps:
- fixing the piezo element (4) to the housing (2) at a second face (11) of the piezo element (4),
- applying the acoustic coupling layer (5) to a first face (8) of the piezo element (4) opposite the second face (11) or applying the acoustic coupling layer (5) to the acoustic window (9),
- connecting the acoustic window (9) to the housing (2) such that the housing (2) abuts the acoustic window (9) to ensure a constant thickness of the acoustic coupling layer (5) between the first face(8) and the acoustic window (9) in the resting position of the piezo element (4).

11. The method according to claim 10, **characterized in that**, the piezo element (4) is fixed to the housing (2) by an adhesive connection.

12. The method according to claim 11, **characterized in that**, the piezo element (4) is kept in a position with the second face (11) downwards until the adhesive connection to the housing (2) has cured.

13. The method according to claim 10, **characterized in that**, the piezo element (4) is fixed to the housing (2) by a snap connection.

## Patentansprüche

1. Ultraschallwandler (1), der ein Piezoelement (4), ein akustisches Fenster (9), ein Gehäuse und eine akustische Verbindungschicht (5) umfasst, wobei die akustische Verbindungschicht (5) zwischen dem akustischen Fenster (9) und einer ersten Fläche (8) des Piezoelementes (4) angeordnet ist, **dadurch gekennzeichnet, dass** das Piezoelement (4) am Gehäuse (2) an einer zweiten Fläche (11) des Piezoelementes (4) gegenüber der akustischen Verbindungschicht (5) befestigt ist; und wobei das Gehäuse (2) an das akustische Fenster (9) grenzt, um eine konstante Dicke der akustischen Verbindungschicht (5) zwischen der ersten Fläche (8) und dem akustischen Fenster (9) in der Ruheposition des Piezoelementes (4) sicherzustellen.

2. Ultraschallwandler (1) nach Anspruch 1, **dadurch gekennzeichnet, dass** das Gehäuse (2) und/oder das akustische Fenster (9) ein Abstandskontrollmerkmal (6) umfassen.

3. Ultraschallwandler (1) nach Anspruch 2, **dadurch gekennzeichnet, dass** das Abstandskontrollmerkmal (6) mindestens einen Schenkel (10) umfasst.

4. Ultraschallwandler (1) nach Anspruch 2 oder 3, **dadurch gekennzeichnet, dass** das Abstandskontrollmerkmal (6) eine Schulter (7) umfasst, die mit der zweiten Fläche (11) verbunden ist.

5. Ultraschallwandler (1) nach einem der Ansprüche 1 bis 4, **dadurch gekennzeichnet, dass** die akustische Verbindungschicht (5) einen Klebstoff und/oder eine Paste und/oder ein Öl umfasst.

6. Ultraschallwandler (1) nach einem der Ansprüche 1 bis 5, **dadurch gekennzeichnet, dass** das akustische Fenster (9) in einem flachen Boden eines topfförmigen Elementes (3) angeordnet ist.

7. Ultraschallwandler (1) nach einem der Ansprüche 1 bis 6, **dadurch gekennzeichnet, dass** das Piezoelement (4) eine zylindrische Form hat, und das Piezoelement (4) nur mit dem Gehäuse (2) an einem radial äußeren Ende (12) der zweiten Fläche (11) verbunden ist.

8. Ultraschall-Energiemessgerät, das einen Ultraschallwandler (1) nach einem der Ansprüche 1 bis 7 umfasst.

9. Ultraschall-Strömungsmessgerät, das einen Ultraschallwandler (1) nach einem der Ansprüche 1 bis 7 umfasst.

10. Verfahren zum Herstellen eines Ultraschallwandlers (1), der ein Piezoelement (4), ein akustisches Fenster (9), ein Gehäuse (2) und eine akustische Verbindungschicht (5) umfasst, das die folgenden Schritte enthält:
- Befestigen des Piezoelementes (4) am Gehäuse (2) an einer zweiten Fläche (11) des Piezoelementes (4),
- Auftragen der akustischen Verbindungschicht (5) auf eine erste Fläche (8) des Piezoelementes (4) gegenüber der zweiten Fläche (11) oder Auftragen der akustischen Verbindungschicht (5) auf das akustische Fenster (9),
- Verbinden des akustischen Fensters (9) mit dem Gehäuse (2) derart, dass das Gehäuse (2) an das akustische Fenster (9) grenzt, um eine konstante Dicke der akustischen Verbindungschicht (5) zwischen der ersten Fläche (8) und dem akustischen Fenster (9) in der Ruheposition des Piezoelementes (4) sicherzustellen.

11. Verfahren nach Anspruch 10, **dadurch gekennzeichnet, dass** das Piezoelement (4) am Gehäuse (2) durch eine Klebverbindung befestigt ist.

12. Verfahren nach Anspruch 11, **dadurch gekennzeichnet, dass** das Piezoelement (4) in einer Position mit der zweiten Fläche (11) nach unten gehalten wird, bis die Klebverbindung mit dem Gehäuse (2) gehärtet ist.

13. Verfahren nach Anspruch 10, **dadurch gekennzeichnet, dass** das Piezoelement (4) am Gehäuse (2) durch eine Schnappverbindung befestigt ist.

## Revendications

1. Transducteur ultrasonore (1), comprenant un élément piézoélectrique (4), une fenêtre acoustique (9), un boîtier et une couche de couplage acoustique (5), la couche de couplage acoustique (5) étant agencée entre la fenêtre acoustique (9) et une première face (8) de l'élément piézoélectrique (4), **caractérisé en ce que** l'élément piézoélectrique (4) est fixé au boîtier (2) au niveau d'une seconde face (11) de l'élément piézoélectrique (4) opposée à la couche de couplage acoustique (5), et le boîtier (2) étant en butée contre la fenêtre acoustique (9) pour assurer une épaisseur constante de la couche de couplage acoustique (5) entre la première face (8) et la fenêtre acoustique (9) dans la position de repos de l'élément piézoélectrique (4).

2. Transducteur ultrasonore (1) selon la revendication 1, **caractérisé en ce que** le boîtier (2) et/ou la fenêtre acoustique (9) comprennent une caractéristique de commande de distance (6).

3. Transducteur ultrasonore (1) selon la revendication 2, **caractérisé en ce que** la caractéristique de commande de distance (6) comprend au moins une patte (10).

4. Transducteur ultrasonore (1) selon la revendication 2 ou 3, **caractérisé en ce que** la caractéristique de commande de distance (6) comprend un épaulement (7) qui est relié à la seconde face (11).

5. Transducteur ultrasonore (1) selon l'une quelconque des revendications 1.à 4, **caractérisé en ce que** la couche de couplage acoustique (5) comprend un adhésif et/ou une pâte et/ou une huile.

6. Transducteur ultrasonore (1) selon l'une quelconque des revendications 1 à 5, **caractérisé en ce que** la fenêtre acoustique (9) est agencée dans un fond plat d'un élément en forme de pot (3).

7. Transducteur ultrasonore (1) selon l'une quelconque des revendications 1 à 6, **caractérisé en ce que** l'élément piézoélectrique (4) a une forme cylindrique et l'élément piézoélectrique (4) est relié uniquement au boîtier (2) au niveau de l'extrémité radialement externe (12) de la seconde face (11).

8. Compteur d'énergie ultrasonore comprenant un transducteur ultrasonore (1) selon l'une quelconque des revendications 1 à 7.

9. Débitmètre à ultrasons comprenant un transducteur ultrasonore (1) selon l'une quelconque des revendications 1 à 7.

10. Procédé de fabrication d'un transducteur ultrasonore (1) comprenant un élément piézoélectrique (4), une fenêtre acoustique (9), un boîtier (2) et une couche de couplage acoustique (5), comprenant les étapes suivantes :
la fixation de l'élément piézoélectrique (4) au boîtier (2) au niveau d'une seconde face (11) de l'élément piézoélectrique (4),
l'application de la couche de couplage acoustique (5) sur une première face (8) de l'élément piézoélectrique (4) à l'opposé de la seconde face (11) ou l'application de la couche de couplage acoustique (5) sur la fenêtre acoustique (9),
la liaison de la fenêtre acoustique (9) au boîtier (2) de sorte que le boîtier (2) vient en butée contre la fenêtre acoustique (9) pour assurer une épaisseur constante de la couche de couplage acoustique (5) entre la première face (8) et la fenêtre acoustique (9) dans la position de repos de l'élément piézoélectrique (4).

11. Procédé selon la revendication 10, **caractérisé en ce que** l'élément piézoélectrique (4) est fixé au boîtier (2) par une liaison adhésive.

12. Procédé selon la revendication 11, **caractérisé en ce que** l'élément piézoélectrique (4) est maintenu dans une position avec la seconde face (11) vers le bas jusqu'à ce que la liaison adhésive au boîtier (2) ait durci.

13. Procédé selon la revendication 10, **caractérisé en ce que** l'élément piézoélectrique (4) est fixé au boîtier (2) par une liaison par encliquetage.
